# EUROPÄISCHE PATENTSCHRIFT

(11) **EP 0 767 921 B1**
(45) Veröffentlichungstag und Bekanntmachung des Hinweises auf die Patenterteilung: **21.10.1998**
(21) Anmeldenummer: 95920768.9
(22) Anmeldetag: 07.06.1995
(51) Int. Cl.: G02B 6/34

(54) **EINRICHTUNG ZUR RÄUMLICHEN TRENNUNG UND/ODER ZUSAMMENFÜHRUNG OPTISCHER WELLENLÄNGENKANÄLE**
DEVICE FOR SPATIALLY SEPARATING AND/OR BRINGING TOGETHER OPTICAL WAVELENGTH CHANNELS
DISPOSITIF DE SEPARATION SPATIALE ET/OU DE REUNION DE CANAUX OPTIQUES DE LONGUEURS D'ONDE

(30) Priorität: 28.06.1994 DE 4422651
(43) Veröffentlichungstag der Anmeldung: 16.04.1997
(73) Patentinhaber: SIEMENS AKTIENGESELLSCHAFT, 80333 München (DE)
(72) Erfinder: MICHEL, Herbert, D-81547 München (DE); MÄRZ, Reinhard, D-81667 München (DE); REICHELT, Achim, D-82008 Unterhaching (DE); HEISE, Gerhard, D-81793 München (DE)
(86) Internationale Anmeldenummer: DE9500745
(87) Internationale Veröffentlichungsnummer: WO9600915

(56) Entgegenhaltungen:
- EP-A- 0 476 384
- JOURNAL OF LIGHTWAVE TECHNOLOGY, Bd. 11, Nr. 2, Februar 1993, NEW YORK US, Seiten 212 - 219 R.ADAR ET AL. 'Broad-band array multiplexers made with silica waveguides on silicon'
- JOURNAL OF LIGHTWAVE TECHNOLOGY, Bd. 8, Nr. 1, Januar 1990, NEW YORK US, Seiten 118 - 124 A.V.VELLEKOOP ET AL. 'A small-size polarization splitter based on a planar optical phased array'
- IEEE PHOTONICS TECHNOLOGY LETTERS, Bd. 3, Nr. 10, Oktober 1991, NEW YORK US, Seiten 896 - 899 C.DRAGONE ET AL. 'Integrated optics n x n multiplexer on silicon'
- Electronics Letters, Vol.28,No.4, Februar 1992, Seiten 380-382

## Beschreibung

Die Erfindung betrifft eine Einrichtung zur räumlichen Trennung und/oder Zusammenführung optischer Wellenlängenkanäle nach dem Oberbegriff des Patentanspruchs 1.

Derartige Einrichtungen finden in der optischen Informationsübertragung zunehmendes Interesse als spektrale Filter für den Wellenlängen-Multiplex-Betrieb (siehe beispielsweise A.R. Vellekoop, M.K. Smit: Four-channel integrated-optic wavelength demultiplexer with weak polarisation dependence, IEEE J. Lightwave Techn. 9 (1991), S. 310-314; H. Takahashi, I. Nishi, Y.Hibino: 10 GHz spacing optical frequency division multiplexer based on arrayed-waveguide grating, Electron. Lett. 28 (1992), S. 380-383; C. Dragone, C.A. Edwards, R.C. Kistler: Integrated optics NxN multiplexer on silicon, IEEE J. Lightwave Techn. 10 (1992), S. 896-899; R. Adar, C.H. Henry, C. Dragone, R. C. Kistler, M.A. Milbrodt: Broad-band arrayed multiplexers made with silica waveguides on silicon, IEEE J. Lightwave Techn. 11 (1993), S. 212-219.).Sie werden auch als Phased-Array-Filter bezeichnet.

Wie konventionelle Gitter-Spektrographen ermöglichen derartige Einrichtungen die parallele Filterung vieler optischer Wellenlängenkanäle.

Die bei einer derartigen Einrichtung vorgesehene optische Phasenschieberanordnung aus den mehreren gekrümmt verlaufenden streifenartigen optischen Wellenleitern unterschiedlicher Länge (mit einem Schichtwellenleiter am jeden Ende) bildet einen Phasenschieberbereich

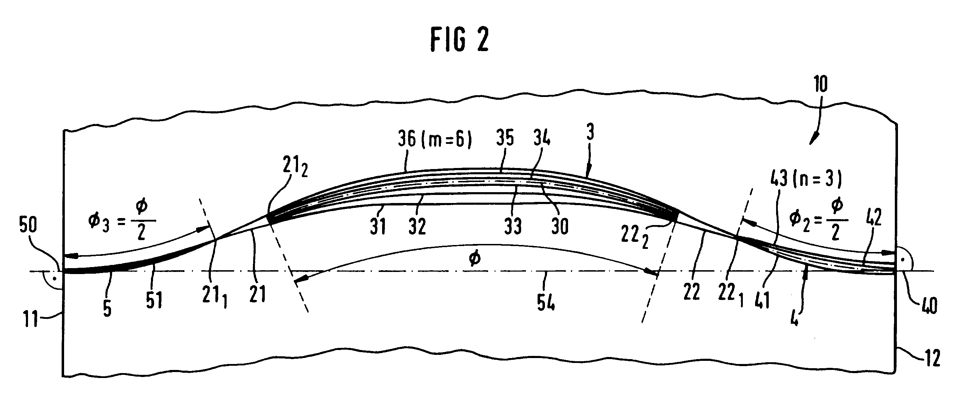

Bei einer bereits vorgeschlagenen Einrichtung der eingangs genannten Art (siehe Fig. 2) ist eine Einkoppelanordnung aus wenigstens einem zu den Wellenleitern der Phasenschieberanordnung entgegengesetzt gekrümmt verlaufenden streifenartigen optischen Wellenleiter vorhanden, welche die der Substratkante zugekehrte Stirnfläche des einen Schichtwellenleiters optisch mit dieser Substratkante verbindet. Die von der Phasenschieberanordnung abgekehrte Stirnfläche des anderen Schichtwellenleiters ist durch zu den Wellenleitern der Phasenschieberanordnung entgegengesetzt gekrümmt verlaufende streifenartige optische Wellenleiter einer Auskoppelanordnung optisch mit einer diesem anderen Schichtwellenleiter zugeordneten anderen Substratkante verbunden.

Zur räumlichen Trennung der optischen Wellenlängenkanäle λ₁ bis λₙ, wobei n eine beliebige ganze Zahl sein kann, werden diese Wellenlängenkanäle an der einen Substratkante in einem gemeinsamen Punkt in den Wellenleiter der Einkoppelanordnung eingekoppelt und dem einen Schichtwellenleiter zugeführt. In diesem Schichtwellenleiter breitet sich das Licht frei aus und wird gleichmäßig auf die Wellenleiter der Phasenschieberanordnung verteilt, d.h. jeder einzelne Wellenlängenkanal wird gleichmäßig auf diese Wellenleiter verteilt.

Das auf die Wellenleiter der Phasenschieberanordnung verteilte Licht wird in diesen Wellenleitern mit einer von Wellenleiter zu Wellenleiter variierenden Phasenverschiebung dem anderen Schichtwellenleiter zugeführt. Im anderen Schichtwellenleiter wird das gefilterte Licht je nach seiner Wellenlänge auf je einen von mehreren räumlich getrennten Punkten auf der von der Phasenschieberanordnung abgekehrten Stirnfläche des anderen Schichtwellenleiters fokussiert.An jeden dieser Punkte ist je einer der Wellenleiter der Auskoppelanordnung angekoppelt.

Der oder die Wellenleiter der Einkoppelanordnung und die Wellenleiter der Auskoppelanordnung haben zwei Funktionen zu erfüllen:
a) Durch ihre Lage und Breite bestimmten sie die Wellenlänge und Bandbreite der einzelnen Wellenlängenkanäle des Filters, analog zum Spalt eines konventionellen optischen Monochromators.
b) Durch ihre Krümmung gleichen sie gemeinsamen den gekrümmten Verlauf der Wellenleiter der Phasenschieberanordnung aus, so daß die Ein- und Auskopplung in das und aus dem Filter an zueinander im wesentlichen parallelen Substratkanten ermöglicht ist.

Zusätzlich sollen die Wellenleiter der Auskoppelanordnung den durch die Dispersion des Filters bedingten räumlichen Abstand der Wellenlangenkanäle so weit erhöhen, daß sich Faser- oder Photodiodenarrays direkt an die Einrichtung ankoppeln lassen.

Ein Nachteil des Phased-Array-Filters gegenüber bestimmten anderen Spektrographen, beispielsweise Flat-Field-Spektrographen, besteht darin, daß die Zentralwellenlänge und der Abstand der einzelnen Wellenlängenkanäle des Filters durch die Geometrie des Layouts und durch die effektive Brechzahl der Wellenleiter vollständig festgelegt sind. Eine nachträgliche Justierung ist nicht möglich. Dadurch sind zum einen die Herstellungstoleranzen für ein Filter mit definierten Kanälen sehr eng, zum anderen wird bereits ein neues Layout erforderlich, wenn bei sonst gleichem Kanalraster eine unterschiedliche absolute Lage der Kanäle benötigt wird.

Um zumindest eine gewisse Flexibilität in der Wahl der Zentralwellenlänge zu haben, besteht bei der vorgeschlagenen Einrichtung die Einkoppelanordnung meist aus mehreren Wellenleitern. Zu jedem von ihnen gehören dann eigene, gegenüber den anderen spektral verschobene Ausgangswellenlängenkanäle.

Aufgabe der Erfindung ist es, eine Einrichtung der eingangs genannten Art dahingehend zu verbessern, daß sich die Zentralwellenlänge der fertigen Einrichtung durch Variation des Orts der Einkopplung innerhalb gewisser Grenzen kontinuierlich einstellen läßt.

Diese Aufgabe wird durch die im kennzeichnenden Teil des Anspruchs 1 angegebenen Merkmale gelöst.

Durch die erfindungsgemäße Maßnahme kann das Licht direkt in den einen Schichtwellenleiter eingekoppelt werden. Eine Translation des beispielsweise durch eine Einkoppelfaser definierten und zum Einkoppeln dienenden Punktes an der betreffenden Stirnfläche des einen Schichtwellenleiters in der Ebene des einen Schichtwellenleiters parallel zur einen Substratkante führt zu einer spektralen Versschiebung der Transmissionswellenlänge eines jeden Wellenleiters der Auskoppelanordnung. Auf diese Weise läßt sich bei der Justierung der Einkoppelfaser die gewünschte Zentralwellenlänge der erfindungsgemäßen Einrichtung einstellen.

Die erfindungsgemäße Einrichtung kann auch zum Zusammenführen getrennter optischer Wellenlängenkanäle verwendet werden. Die getrennten Wellenlängenkanäle sind in diesem Fall individuell in räumlich getrennten Punkten der von der Phasenschieberanordnung abgekehrten Stirnfläche des anderen Schichtwellenleiters einzukoppeln und können an einem gemeinsamen Punkt der der einen Substratkante zugekehrten Stirnfläche des einen Schichtwellenleiters ausgekoppelt werden.

Die Erfindung wird in der nachfolgenden Beschreibung anhand der Figuren beispielhaft näher erläutert. Es zeigen:
- Figur 1: eine Draufsicht auf eine erfindungsgemäße Einrichtung, und
- Figur 2: eine Draufsicht auf eine bereits vorgeschlagene Einrichtung.

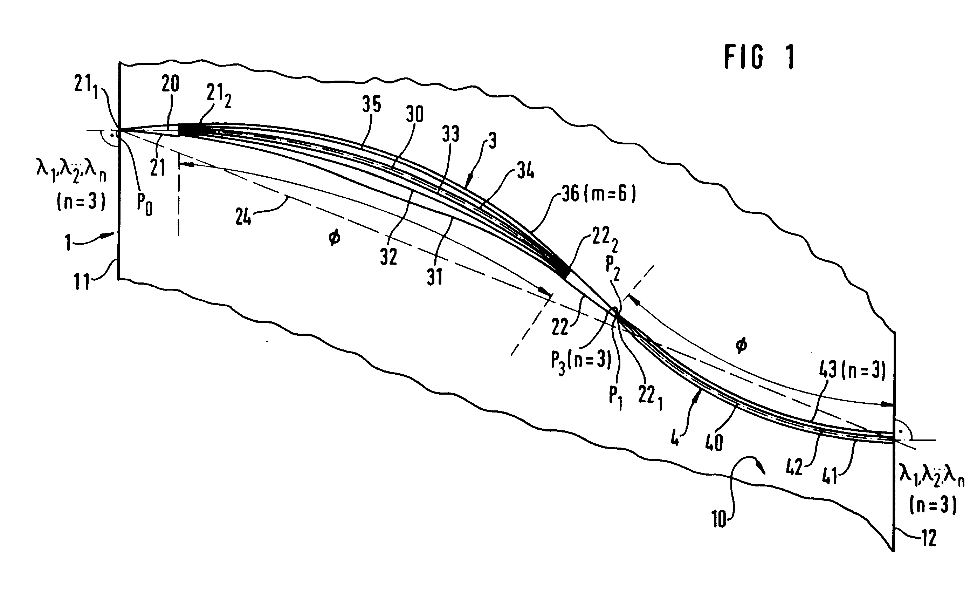

Die Figuren sind nicht maßstäblich und schematisch. Bei den in den Figuren 1 und 2 dargestellten Einrichtungen zur räumlichen Trennung und/oder Zusammenführung von n (n = 2, 3, ...) optischen Wellenlängenkanälen λ₁ bis λₙ sind auf der Oberfläche 10 eines Substrats 1 zwischen einer Substratkante 11 und einer dazu im wesentlichen parallelen anderen Substratkante 12
- ein der einen Substratkante 11 zugeordneter Schichtwellenleiter 21 und ein von diesem Schichtwellenleiter 21 räumlich getrennter und der anderen Substratkante 12 zugeordneter anderer Schichtwellenleiter 22,
- eine optische Phasenschieberanordnung 3 aus m (m = 2, 3, ...) gekrümmt verlaufenden streifenartigen optischen Wellenleitern 31 bis 3m unterschiedlicher optischer Länge und
- eine Aus- und/oder Einkoppelanordnung 4 aus n zu den Wellenleitern 31 bis 3m der Phasenschieberanordnung 3 entgegengesetzt gekrümmt verlaufenden streifenartigen optischen Wellenleitern 41 bis 4n angeordnet,
wobei im allgemeinen n < m gewählt ist.

In den dargestellten Beispielen ist der Einfachheit halber m = 6 und n = 3 gewählt. In der Praxis sind m = 50 und mehr und n = 8 bis 10 typische Werte. Je größer n ist desto mehr Wellenlängenkanäle können durch die als optisches Gitter wirkende Phasenschiebereinrichtung getrennt werden.

Der eine und andere Schichtwellenleiter 21 und 22 weist jeweils eine der zugeordneten Substratkante 11 bzw. 12 zugekehrte Stirnfläche 21₁ bzw. 22₁ und eine von der ersten Stirnfläche 21₁, 22₁ abgekehrte Stirnfläche 21₂ bzw. 22₂ zum jeweiligen Ein- und/oder Auskoppeln der optischen Wellenlängenkanäle λ₁ bis λₙ auf.

Die Wellenleiter 31 bis 3m der Phasenschieberanordnung 3 verbinden die dieser Anordnung zugekehrte Stirnflächen 21₂ und 22₂ des einen und anderen Schichtwellenleiters 21 bzw. 22 optisch miteinander und definieren eine gemeinsame, gekrümmt verlaufende optische Achse 30 bestimmter Krümmung sowie einen bestimmten Krümmungswinkel Φ.

Die Funktionsweise der Phasenschieberanordnung ist in der nicht vorveröffentlichten älteren deutschen Patentanmeldung P 44 00 554.7 (GR 94 P 1013 DE), mit der die EP-A-0 662 621 korrespondiert, beschrieben. Bei dieser bereits beschriebenen Phasenschieberanordnung liegt die Besonderheit vor, daß zumindest ein Wellenleiter eine steuerbare Phasenschiebereinrichtung zur gesteuerten Erzeugung einer Phasenverschiebung einer in diesem Wellenleiter geführten optischen Welle aufweist. Diese Besonderheit, die eine Verbesserung ist, ist im allgemeinen und auch bei der hier beschriebenen erfindungsgemäßen Einrichtung nicht erforderlich, kann aber vorgesehen sein.

Die Wellenleiter 41 bis 4n der Aus- und/oder Einkoppelanordnung 4 verbinden die von der Phasenschiebereinrichtung 3 abgekehrte Stirnfläche 22₁ des anderen Schichtwellenleiters 22 optisch mit der dieser Stirnfläche 22₁ zugeordneten anderen Substratkante 12 derart, daß die Wellenleiter 41 bis 4n der Aus- und/oder Einkoppelanordnung 4 im wesentlichen senkrecht an der andern Substratkante 12 enden und definieren eine gemeinsame gekrümmt verlaufende zweite Achse 40 einer zur Krümmung der Achse 30 der Phasenschiebereinrichtung 3 entgegengesetzten aber im wesentlichen gleich großen Krümmung sowie den gleichen Krümmungswinkel Φ. "Senkrecht an der Substratkante enden" bedeutet, daß die optische Achse 40 der Aus- und/oder Einkoppelanordnung 4 die andere Substratkante 12 senkrecht schneidet.

Bei der in Figur 1 dargestellten erfindungsgemäßen Einrichtung liegt die erfindungswesentliche Besonderheit vor,daß der der einen Substratkante 11 zugeordnete eine Schichtwellenleiter 21 unmittelbar an dieser Substratkante 11 derart angeordnet ist, daß die optische Achse 20 dieses einen Schichtwellenleiters 21, welche die beiden Stirnflächen 21₁ und 21₂ dieses Schichtwellenleiters verbindet, im wesentlichen senkrecht zur ersten Substratkante 11 ist.

Überdies liegt bei der erfindungsgemäßen Einrichtung die prinzipiell nicht notwendige Besonderheit vor, daß die gekrümmten Wellenleiter 31, 32,...3m der Phasenschiebereinrichtung 3 und die gekrümmten Wellenleiter 41, 42,...4n der Ausund/oder Einkoppelanordnung 4 eine entgegengesetzte aber betragsmäßig im wesentlichen gleiche Krümmung und im wesentlichen den gleichen Krümmungswinkel Φ definieren.

Die optischen Achsen der Schichtwellenleiter und der Phasenschieberanordnung und Aus- und/oder Einkoppelanordnung gehen vorzugsweise glatt ineinander über.

Beim Betrieb der erfindungsgemäßen Einrichtung nach Figur 1 wird eine nicht dargestellte Faser zum Ein- und/oder Auskoppeln der Wellenlängenkanäle λ₁ bis λₙ in oder aus dem einen Schichtwellenleiter 21 gegenüber der der einen Substratkante 11 zugekehrten Stirnfläche 21₁ dieses einen Schichtwellenleiters 21 koaxial zur optischen Achse 20 dieses Schichtwellenleiters 21 derart angeordnet, daß sie längs der einen Substratkante 11 achsparallel zur optischen Achse 20 verschiebbar und dadurch auf die gewünschte Zentralwellenlange der Einrichtung einstellbar ist.

Durch die betragsmäßig gleiche Krümmung und den gleichen Krümmungswinkel Φ der Wellenleiter der Phasenschieber- und Aus- und/oder Einkoppelanordnung 3 bzw. 4 wird erreicht, daß die Aus- und/oder Einkoppelanordnung 4 die Krümmung der Phasenschieberanordnung 3 im wesentlichen ausgleicht und daß die Wellenleiter 41 bis 4n der Aus- und/oder Einkoppelanordnung 4 senkrecht an der zur einen Substratkante 11 im wesentlichen parallelen anderen Substratkante 12 enden.

Es sei darauf hingewiesen, daß bei der erfindungsgemäßen Einrichtung eine Aus- und/oder Einkoppelanordnung 4 prinzipiell nicht erforderlich ist, obgleich sie in vielen Fällen vorteilhaft ist, besonders in der vorstehend beschriebenen Ausführung. Beispielsweise könnten gegenüber den Punkten der betreffenden Stirnflächen der Schichtwellenleiter, über die Ein- oder Ausgekoppelt wird, verschiebbare optische Sender oder Empfänger zum Senden oder Empfangen der Wellenlängenkanäle unmittelbar gegenüber den Stirnflächen angebracht sein. Auch könnte der andere Schichtwellenleiter dann unmittelbar an der anderen Substratkante angeordnet sein.

Die bereits vorgeschlagene Einrichtung nach Figur 2, bei der mit der erfindungsgemäßen Einrichtung nach Figur 1 korrespondierende Teile mit den gleichen Bezugszeichen versehen und gleich benannt sind, unterscheidet sich von der erfindungsgemäßen Einrichtung dadurch, daß keiner der beiden Schichtwellenleiter 21 bzw. 22 unmittelbar an einer Substratkante 11 oder 12 angeordnet ist, vielmehr ist eine Einkoppelanordnung 5 aus zumindest einem zu den Wellenleitern 31 bis 3m der Phasenschieberanordnung 3 entgegengesetzt gekrümmt verlaufenden streifenartigen optischen Wellenleiter 51 vorgesehen, der die der einen Substratkante 11 zugekehrte Stirnfläche 21₁ des einen Schichtwellenleiters 21 optisch mit der einen Substratkante 11 derart verbindet, daß der Wellenleiter 51 im wesentlichen senkrecht an der einen Substratkante 11 endet, und eine gekrümmt verlaufende weitere optische Achse 50 einer zur Krümmung der Achse 30 der Phasenschieberanordnung entgegengesetzten aber im wesentlichen gleich großen Krümmung sowie einen weiteren Krümmungswinkel Φ₃ definiert.

Der Krümmungswinkel Φ₂ der Wellenleiter 41 bis 4n der Auskoppelanordnung 4 und der Krümmungswinkel Φ₃ des Wellenleiters 51 der Einkoppelanordnung 5 betragen bei der Einrichtung nach Figur 2 jeweils gleich die Hälfte des Krümmungswinkels Φ der Wellenleiter 31 bis 3m der Phasenschieberanordnung 3 dieser Einrichtung.

Durch diese Maßnahmen wird bei der Einrichtung nach Figur 2 erreicht, daß der Wellenleiter 51 senkrecht an der einen Substratkante 11 und die Wellenleiter 41 bis 4n senkrecht an der anderen Substratkante 12 enden.

Im Unterschied zur vorgeschlagenen Einrichtung nach Figur 2, bei welcher eine gerade Linie 54, die das an der einen Substratkante 11 befindliche Ende des Wellenleiters 51 mit einem an der anderen Substratkante 12 befindlichen Ende eines Wellenleiters 41, 42 ... 4n verbindet, die beiden Substratkanten 11 und 12 im wesentlichen senkrecht schneidet, verläuft eine entsprechende gerade Linie 24 bei der erfindungsgemäßen Einrichtung nach Figur 1 deutlich schräg zu den Substratkanten 11 und 12 .

## Patentansprüche

1. Einrichtung zur räumlichen Trennung und/oder Zusammenführung optischer Wellenlängenkanäle (λ₁, λ₂, ...λₙ), bei der
auf der eine Substratkante (11) aufweisenden Oberfläche (10) eines Substrats (1)
- zwei räumlich voneinander getrennte Schichtwellenleiter (21, 22) und
- eine zwischen den zwei Schichtwellenleitern (21, 22) vorgesehene optische Phasenschieberanordnung (3) aus mehreren gekrümmt verlaufenden streifenartigen optischen Wellenleitern (31, 32, ...3m) unterschiedlicher optischer Länge angeordnet sind,
wobei
- jeder Schichtwellenleiter (21, 22) je eine der Phasenschieberanordnung (3) zugekehrte (21₂; 22₂) und je eine von der Phasenschieberanordnung (3) abgekehrte Stirnfläche (21₁; 22₁) zum Ein- und/oder Auskoppeln der optischen Wellenlängenkanäle (λ₁, λ₂,...λₙ) aufweist,
- bei einem (21) der beiden Schichtwellenleiter (21, 22) die von der Phasenschieberanordnung (3) abgekehrte Stirnfläche (21₁) der Substratkante (11) zugekehrt ist und
- die der Phasenschieberanordnung (3) zugekehrten Stirnflächen (21₂; 22₂) der Schichtwellenleiter (21, 22) durch die Wellenleiter (31, 32, ...3m) der Phasenschieberanordnung (3) optisch miteinander verbunden sind, und
wobei
- die Wellenlängenkanäle (λ₁, λ₂,...λₙ) in einem gemeinsamen Punkt (P₀) der der Substratkante zugekehrten Stirnfläche (21₁) des einen Schichtwellenleiters (21) in diesen einen Schichtwellenleiter (21) einkoppelbar und in diesem einen Schichtwellenleiter (21) jeweils auf alle Wellenleiter (31, 32, ...3m) der Phasenschieberanordnung (3) verteilbar sind, und
- die auf die Wellenleiter (31, 32, ...3m) der Phasenschieberanordnung (3) verteilten Wellenlängenkanäle (λ₁, λ₂,... λₙ) in diesen Wellenleitern (31, 32, ...3m) dem anderen Schichtwellenleiter (22) zugeführt und in diesem anderen Schichtwellenleiter (22) durch optische Interferenz auf räumlich voneinander getrennte Punkte (P₁, P₂,... Pₙ) der von der Phasenschieberanordnung (3) abgekehrten Stirnfläche (22₁) des anderen Schichtwellenleiters (22) zur individuellen Auskopplung aus diesem anderen Schichtwellenleiter (22) verteilt sind,
und/oder
- die Wellenlängenkanäle (λ₁, λ₂, ...λₙ) individuell in räumlich getrennten Punkten (P₁, P₂,...Pₙ) der von der Phasenschieberanordnung (3) abgekehrten Stirnfläche (22₁) des anderen Schichtwellenleiters (22) in diesen anderen Schichtwellenleiter (22) einkoppelbar und in diesem anderen Schichtwellenleiter (22) jeweils auf alle Wellenleiter (31, 32, ...3m) der Phasenschieberanordnung (3) verteilbar sind, und
- die auf die Wellenleiter (31, 32, ...3m) der Phasenschieberanordnung (3) verteilten Wellenlängenkanäle (λ₁, λ₂,... λₙ) in diesen Wellenleitern (31, 32, ...3m) dem einen Schichtwellenleiter (21) zugeführt und in diesem einen Schichtwellenleiter (21) durch optische Interferenz einem gemeinsamen Punkt (P₀) der der Substratkante zugekehrten Stirnfläche (21₁) des einen Schichtwellenleiters (21) zur gemeinsamen Auskopplung aus diesem einen Schichtwellenleiter (21) zugeführt sind,
**dadurch gekennzeichnet,**
- daß der eine Schichtwellenleiter (21) unmittelbar an der Substratkante (11) derart angeordnet ist, daß die optische Achse (20) dieses einen Schichtwellenleiters (21), welche die beiden Stirnflächen (21₁, 21₂) dieses Schichtwellenleiters (21) verbindet, im wesentlichen senkrecht zur Substratkante (11) ist.

2. Einrichtung nach Anspruch 1,
**dadurch gekennzeichnet,**
daß die von der Phasenschieberanordnung (3) abgekehrte Stirnfläche (22₁) des anderen Schichtwellenleiters (22) einer anderen Substratkante (12) zugekehrt und in einem Abstand von dieser anderen Substratkante (12) angeordnet ist, und daß eine Aus- und/oder Einkoppelanordnung (4) aus mehreren streifenartigen optischen Wellenleitern (41, 42, ...4n), welche die mehreren Punkte (P₁, P₂,...Pₙ) zur individuellen Aus- und/oder Einkopplung der Wellenlängenkanäle (λ₁, λ₂,... λₙ) der der anderen Substratkante (12) zugekehrten Stirnfläche (22₁) des anderen Schichtwellenleiters (22) mit der anderen Substratkante (12) verbinden, vorgesehen ist.

3. Einrichtung nach Anspruch 2,
**dadurch gekennzeichnet,**
daß die eine Substratkante (11) und andere Substratkante (12) im wesentlichen parallel zueinander sind, und daß die Wellenleiter (41, 42,...4n) der Aus- und/oder Einkoppelanordnung (4) gekrümmt sind und eine gemeinsame gekrümmte optische Achse (40), die zu einer den Wellenleitern (31, 32,...3m) der Phasenschieberanordnung (3) gemeinsamen gekrümmten optischen Achse (30) entgegengsetzt aber mit im wesentlichen der gleichen Krümmung und in einem im wesentlichen gleichen Krümmungswinkel (Φ) gekrümmt ist, aufweisen und senkrecht an der anderen Substratkante (12) enden.

## Claims

1. Device for spatially separating and/or joining optical wavelength channels (λ₁, λ₂ ... λₙ), in which there are arranged on the surface (10), having a substrate edge (11), of a substrate (1)
- two mutually spatially separated planar waveguides (21, 22) and
- an optical phase-shift arrangement (3) which is provided between the two planar waveguides (21, 22) and is composed of a plurality of strip-type optical waveguides (31, 32, ...3m) of different optical length which extend in a curved fashion, it being the case that
- each planar waveguide (21, 22) in each case has one end face (21₂; 22₂) which faces the phase-shift arrangement (3) and one (21₁; 22₁) which is averted from the latter, which end faces serve for launching and/or outputting the optical wavelength channels (λ₁, λ₂ ...λₙ),
- the end face (21₁) averted from the phase-shifter arrangement (3) faces the substrate edge (11) in one (21) of the two planar waveguides (21, 22), and
- the end faces (21₂; 22₂), facing the phase-shifter arrangement (3), of the planar waveguides (21, 22) are optically connected to one another by the waveguides (31, 32, ...3m) of the phase-shift arrangement (3),
and it being the case that
- at a common point (P₀) of the end face (21₁), facing the substrate edge, of one planar waveguide (21), the wavelength channels (λ₁, λ₂ ... λₙ) can be launched into this one planar waveguide (21), and can in each case be distributed in this one planar waveguide (21) onto all the waveguides (31, 32, ...3m) of the phase-shift arrangement (3) and
- the wavelength channels (λ₁, λ₂ ... λₙ) distributed onto the waveguides (31, 32, ...3m) of the phase-shift arrangement (3) are fed in these waveguides (31, 32, ...3m) to the other planar waveguide (22) and are distributed by optical interference in this other planar waveguide (22) onto points (P1, P2, ... Pn), spatially separated from one another, of the end face (221), averted from the phase-shift arrangement (3), of the other planar waveguide (22) for the purpose of individually being output from this other planar waveguide (22),
and/or
- at spatially separated points (P1, P2, ... Pn) on the end face (221), averted from the phase-shift arrangement (3) of the other planar waveguide (22), the wavelength channels (λ₁, λ₂ ... λₙ) can be launched into this other planar waveguide (22) and can be distributed in each case in this other waveguide (22) onto all the waveguides (31, 32, ...3m) of the phase-shift arrangement (3), and
- the wavelength channels (λ₁, λ₂ ...λₙ) distributed onto the waveguides (31, 32, ...3m) of the phase-shift arrangement (3) are fed in these waveguides (31, 32, ...3m) to one planar waveguide (21) and are fed in this one planar waveguide (21) by optical interference to a common point (P₀) of the end face (21₁), facing the substrate edge, of one planar waveguide (21) for the purpose of common outputting from this one planar waveguide (21),
characterized in that
- one planar waveguide (21) is arranged directly at the substrate edge (11) in such a way that the optical axis (20) of this one planar waveguide (21), which connects the two end faces (21₁, 21₂) of this planar waveguide (21), is essentially perpendicular to the substrate edge (11).

2. Device according to Claim 1, characterized in that the end face (22₁), averted from the phase-shift arrangement (3) of the other planar waveguide (22) faces another substrate edge (12) and is arranged at a spacing from this other substrate edge (12), and in that an output and/or launching arrangement (4) is provided which is composed of a plurality of strip-type optical waveguides (41, 42, ...4n), which connect the plurality of points (P₁, P₂, ... Pₙ) for the individual outputting and/or launching of the wavelength channels (λ₁, λ₂ ...λₙ) of the end face (22₁), facing the other substrate edge (12), of the other planar waveguide (22) to the other substrate edge (12).

3. Device according to Claim 2, characterized in that one substrate edge (11) and the other substrate edge (12) are essentially parallel to one another, and in that the waveguides (41, 42, ...4n) of the output and/or launching arrangement (4) are curved and have a common curved optical axis (40), which is curved opposite to a curved optical axis (30) common to the waveguides (31, 32, ...3m) of the phase-shift arrangement (3) but has essentially the same curvature and is curved at essentially the same angle of curvature (Φ), and which terminate perpendicularly at the other substrate edge (12).

## Revendications

1. Dispositif de séparation spatiale et/ou de réunion de canaux optiques de longueurs d'onde (λ₁, λ₂, ... λₙ), où la surface (10) d'un substrat (1) dotée d'un bord de substrat (11) est munie
- de deux guides d'ondes plans (21, 22) séparés spatialement entre eux et
- d'un montage de déphaseur optique (3) installé entre les deux guides d'ondes plans (21, 22) et composé de plusieurs guides d'ondes optiques courbés en forme de bande (31, 32, ... 3m) de longueurs optiques différentes,
dans lequel
- chaque guide d'ondes plan (21, 22) présente toujours une extrémité (21₂; 22₂) orientée vers le montage de déphaseur (3) et une extrémité (21₁; 22₁) opposée au montage de déphaseur (3) afin d'injecter et/ou de prélever les canaux optiques de longueurs d'onde (λ₁, λ₂, ...λₙ),
- pour l'un (21) des deux guides d'ondes plans (21, 22), l'extrémité (21₁) opposée au montage de déphaseur (3) est orientée vers le bord du substrat (11) et
- les extrémités (21₂; 22₂)des guides d'ondes plans (21, 22) orientées vers le montage de déphaseur (3) sont reliées optiquement entre elles par les guides d'ondes (31, 32, ... 3m) du montage de déphaseur (3) et
dans lequel
- les canaux de longueurs d'onde (λ₁, λ₂, ... λₙ) peuvent être injectés, dans un guide d'ondes plan (21), par un point commun (P₀) de l'extrémité (21₁) de ce guide d'ondes plan (21) orientée vers le bord du substrat, puis répartis, dans ce guide d'ondes plan (21), entre tous les guides d'ondes (31, 32, ... 3m) du montage de déphaseur (3) et
- les canaux de longueurs d'onde (λ₁, λ₂, ... λₙ) répartis entre les guides d'ondes (31, 32, ... 3m) du montage de déphaseur (3) sont amenés, dans ces guides d'ondes (31, 32, ... 3m), à l'autre guide d'ondes plan (22) et répartis dans cet autre guide d'ondes plan (22) par interférence optique sur des points séparés spatialement entre eux (P₁, P₂, ... Pₙ) de l'extrémité (22₁) de l'autre guide d'ondes plan (22) opposée au montage de déphaseur (3) en vue de procéder à un prélèvement individuel dans cet autre guide d'ondes plan (22),
et/ou
- les canaux de longueurs d'onde (λ₁, λ₂, ...λₙ) peuvent être injectés individuellement; dans l'autre guide d'ondes plan (22), par des points séparés spatialement (P₁, P₂, ... Pₙ) de l'extrémité (22₁) de cet autre guide d'ondes plan (22) opposée au montage de déphaseur (3), puis répartis, dans cet autre guide d'ondes plan (22), entre tous les guides d'ondes (31, 32, ...3m) du montage de déphaseur (3) et
- les canaux de longueurs d'onde (λ₁, λ₂, ... λₙ) répartis entre les guides d'ondes (31, 32, ... 3m) du montage de déphaseur (3) sont amenés, dans ces guides d'ondes (31, 32, ... 3m), à un guide d'ondes plan (21), puis amenés, dans ce guide d'ondes plan (21), par interférence optique à un point commun (P₀) de l'extrémité (21₁) d'un guide d'ondes plan (21) orientée vers le bord du substrat en vue de procéder au prélèvement commun dans ce guide d'ondes plan (21),
**caractérisé en ce**
- qu'un guide d'ondes plan (21) est directement disposé sur le bord du substrat (11) de sorte que l'axe optique (20) de ce guide d'ondes plan (21), qui relie les deux extrémités (21₁, 21₂) de ce guide d'ondes plan (21), soit essentiellement perpendiculaire au bord du substrat (11).

2. Dispositif selon la revendication 1,
**caractérisé en ce que**
l'extrémité (22₁) de l'autre guide d'ondes plan (22) opposée au montage de déphaseur (3) est orientée vers un autre bord du substrat (12) et disposée à distance de cet autre bord du substrat (12) et en ce qu'est prévu un dispositif de prélèvement et/ou d'injection (4) composé de plusieurs guides d'ondes optiques en forme de bande (41, 42, ... 4n) qui relient, à l'autre bord du substrat (12), les divers points (P₁, P₂, ... Pₙ) de prélèvement et/ou d'injection individuel des canaux de longueurs d'onde (λ₁, λ₂, ... λₙ) de l'extrémité (22₁) de l'autre guide d'ondes plan (22) orientée vers l'autre bord du substrat (12).

3. Dispositif selon la revendication 2,
**caractérisé en ce que**
l'un (11) et l'autre (12) des bords du substrat sont essentiellement parallèles entre eux et
en ce que les guides d'ondes (41, 42, ... 4n) du dispositif de prélèvement et/ou d'injection (4) sont courbés, possèdent un axe optique courbé commun (40) qui est courbé de façon opposée à un axe optique courbé commun (30) par rapport aux guides d'ondes (31, 32, ... 3m) du montage de déphaseur (3), mais avec une courbure essentiellement identique et un angle de courbure essentiellement identique (Φ) et se terminent perpendiculairement à l'autre bord du substrat (12).
